# EUROPÄISCHE PATENTANMELDUNG

(11) **EP 4 249 938 A2**
(43) Veröffentlichungstag der Anmeldung: **27.09.2023**
(21) Anmeldenummer: 23189579.8
(22) Anmeldetag: 21.10.2016
(51) Int. Cl.: G01S 7/03, G01S 13/93, G01S 13/87, G01S 13/34, G01S 7/35, G01S 7/02

(54) **VERFAHREN UND VORRICHTUNG ZUR VERFOLGUNG VON OBJEKTEN, INSBESONDERE SICH BEWEGENDEN OBJEKTEN, IN DEN DREIDIMENSIONALEN RAUM VON ABBILDENDEN RADARSENSOREN**

(30) Priorität: 29.10.2015 DE 102015221163; 30.03.2016 DE 102016205227
(62) Teilanmeldung aus: 16784532.0
(71) Anmelder: Astyx GmbH, 85521 Ottobrunn (DE)
(72) Erfinder: GIERE, Andre, 85667 Oberpframmern (DE); WOLF, Manuel, 85521 Ottobrunn (DE)
(74) Vertreter: Berkenbrink, Kai-Oliver

(57) **Zusammenfassung**

Die Erfindung betrifft ein Verfahren, eine Verwendung und eine Vorrichtung zur Verbesserung und Verfolgung von Objekten, insbesondere sich bewegenden Objekte, in den dreidimensionalen Raum von abbildenden Radarsensoren.

## Beschreibung

Die Erfindung betrifft ein Verfahren, eine Verwendung und eine Vorrichtung zur Verbesserung und Verfolgung von Objekten, insbesondere sich bewegenden Objekte, in den dreidimensionalen Raum von abbildenden Radarsensoren.

Herkömmlich werden bei Millimeterwellen-Radarsensoren zur Verwendung in der Objekterkennung z.B. für automobile und aeronautische Anwendungen die einzelnen Sensoreinheiten oder Frontends jeweils einzeln an eine Steuerungsvorrichtung und Datenauswertungsvorrichtung gekoppelt und die gemeinsame Betrachtung der Frontends erfolgt erst auf der Trackerebene. Für jedes weitere Frontend welches das Sichtfeld vergrößern soll, wachsen die Größe des Systems und dessen Kosten an. Insbesondere in der Luftfahrt kann jedes zusätzlich montierte und zuwartende Gerät erhebliche Kosten verursachen, die von der Anzahl und Größe der verwendeten Sensoren bestimmt werden.

Daher sollten insbesondere Millimeterwellen-Radarsensoren zur Verwendung in der Objekterkennung z.B. für automobile und aeronautische Anwendungen eine kompakte und kostengünstige Bauweise vorweisen. Dies bedeutet aber, dass die Anzahl der Auslese- und Steuerungskomponenten wie auch die benötigten Sensoreinheiten minimiert sein sollte.

Andererseits sollte der Sensor eine Objektdetektion im dreidimensionalen Raum ermöglichen, die zusätzliche eine präzise Lokalisierung sowohl in der Horizontalen als auch in der Vertikalen erlaubt. Außerdem soll eine Verfolgung (Tracking) der Objekte ermöglicht werden. Die Datenrate mit der die Sensorinformationen verarbeitet werden, ist für die Güte der Track Informationen und damit für die Qualität und Performance des Gesamtsystems von großer Bedeutung. Dies wiederum erfordert, bei einer auf einzelnen herkömmlichen Sensoreinheiten basierenden Architektur, eine erhöhte Anzahl und Größe von Auslese- und Steuerungskomponenten.

Die Aufgabe der Erfindung ist, eine Vorrichtung, ein Verfahren sowie ein Radarsystem zur Verfügung zu stellen, die eine Reduktion des Gesamtsystems bezüglich der Größe und Kosten ermöglicht, ohne dass dabei Verluste bezüglich der Auswertungsgeschwindigkeit und Genauigkeit einhergehen.

Die Aufgabe wird vorrichtungsgemäß mit den Merkmalen des Anspruchs 1, verfahrensgemäß mit den Merkmalen des Anspruchs 12 und gemäß dem Radarsystem mit den Merkmalen des Anspruchs 23, sowie eine Verwendung in einem Hubschrauberradar gelöst.

Erfindungsgemäß weist die Vorrichtung zur Bestimmung einer Position eines Objektes im dreidimensionalen Raum, insbesondere eines sich bewegenden Objekts, mindestens zwei Sensoreinheiten und eine zentrale Signalverarbeitungsvorrichtung auf, an welche die Sensoreinheiten gekoppelt sind. Mit dieser Maßnahme wird der Vorteil erzielt, dass die Anzahl der Auslese- und Steuerungskomponenten auf eine einzelne zentrale Datenverarbeitungsvorrichtung reduziert wird, die für eine beliebige Anzahl von Sensoreinheiten die Steuerung und Signalauslese übernimmt. Eine Verringerung der Gesamtgröße und Kosten des Sensors können dadurch erzielt werden. Ferner können Datenauslese- und Datenverarbeitungsprozesse vorteilhaft aufeinander abgestimmt und optimiert werden. Die einzelnen Sensoreinheiten können als eine Einheit ausgelesen und ausgewertet werden. Ferner, durch das Zusammenführen der Sensoreinheiten bereits auf der Ausleseebene kann die Datenauswertung verbessert werden. Da eine einzige Signalverarbeitungsvorrichtung die Datenauslese und die Auswertung für alle Sensoreinheiten ausführt, können Daten partitioniert und auf verschiedenen Ebenen vorverarbeitet werden. Bei mehreren Sensoreinheiten z.B. bei einer gesamträumlichen Erfassung können die einzelnen Sensoreinheiten gezielter mit geringerer Latenzzeit angesteuert werden.

Insbesondere kann der Sensor für verschiedene Anforderungen gezielt adaptiert werden. Im Fall einer Vielzahl sich bewegenden Objekten kann die Datenauslese und Datenauswertung gleichzeitig erfolgen und simultan alle Sensoreinheiten umfassen. Bei einer Vorverarbeitung der Auslesedaten kann auch die Updaterate der Geschwindigkeit der Objekte gezielter angepasst werden. Dadurch kann ein Datenstau auf mehreren Ebenen vermieden werden. Außerdem wird die Datengröße die zur Abbildung übergeben wird durch eine Vorverarbeitung der Daten minimiert.

Das erfindungsgemäße Verfahren zur Bestimmung einer Position eines Objektes im dreidimensionalen Raum, insbesondere eines sich bewegenden Objekts, umfasst mindestens die Verfahrensschritte des Bereitstellens von mindestens zwei Sensoreinheiten und des Koppelns der mindestens zwei Sensoreinheiten mit einer zentralen Signalverarbeitungsvorrichtung.

Innovativ ist, dass die einzelnen Steuerungs- und Auslese- und Verfahrensschritte, die als Gegenstand der Unteransprüche näher beschrieben werden, alle zentral auf der Signalverarbeitungsvorrichtung zusammengefasst werden können, ein Vielfaches des benötigten Datenspeichers kann dadurch reduziert werden. Außerdem dadurch, dass die Sensoreinheiten zentral gesteuert werden, können die einzelnen Verfahrensschritte partitioniert werden und in einer optimierten Reihenfolge durchgeführt werden, sowie Datenübertragungszeiten reduziert werden.

Das erfindungsgemäße Radarsystem umfasst das erfindungsgemäße Verfahren und die erfindungsmäße Vorrichtung. Ein Vorteil, der sich für das Gesamtsystem ergibt, ist die kompakte und kostengünstige Bauweise, die durch die Reduktion der Steuerungs- und Ausleseeinheiten auf eine einzelne ermöglicht wird. Diese Radarsysteme lassen sich kompakter und kostengünstiger herstellen und warten.

Bei der Verwendung als Hubschrauberradar wird auf einfache Weise eine 360° Abdeckung ermöglicht.

Vorteilhafte Ausgestaltungen der Erfindung sind Gegenstand der Unteransprüche.

Die mindestens zwei Sensoreinheiten sind so ausgelegt, dass aus den jeweiligen, durch die Signalverarbeitungsvorrichtung ausgelesenen Daten, ein einzelnes, erweitertes virtuelles Gesichtsfeld von der Signalverarbeitungsvorrichtung erstellt wird. Dies wird ermöglicht durch die Auswahl der Hauptstrahlungsrichtung und/oder durch räumliche Ausrichtung der einzelnen Sensoreinheiten sowohl in einer horizontalen als auch vertikalen Richtung. Die einzelnen Sensoreinheiten werden von der Signalverarbeitungsvorrichtung angesteuert und ausgerichtet, sowohl in einer vertikalen wie auch in einer horizontalen Richtung. Durch diese Positionierung der benachbarten Sensoreinheiten in einem Sensorgehäuse wird ermöglicht, dass sich die Gesichtsfelder der einzelnen Sensoreinheiten um einige Grade des Öffnungswinkels überlagern.

In einer weiteren Ausführungsform können zwei oder mehr Sensoreinheiten planar parallel zueinander angeordnet werden, wenn sie über eine entsprechende Hauptstrahlrichtung verfügen. Die unterschiedliche Richtung der Öffnung des Gesichtsfeldes wird somit durch die unterschiedliche Abstrahlcharakteristik umgesetzt. Durch eine bevorzugte Anordnung in dieser Ausführungsform wird durch die Ausrichtung der einzelnen Sensoreinheiten die Überdeckung des gesamten Gesichtsfeldes des Sensors erreicht.

Die zentrale Signalverarbeitungsvorrichtung ist so konzipiert, dass die Empfangssignale von den Sensoreinheiten nach einem Multiplexverfahren ausgelesen werden können. Multiplexverfahren benötigen eine simultane Verknüpfung aller Sensoreinheiten an die Signalverarbeitungsvorrichtung.

Dabei hat sich als besonders vorteilhaft erwiesen, dass die zentrale Signalverarbeitungsvorrichtung durch das steuern, auslesen und auswerten der einzelnen Sensoreinheiten selektierte Objektlisten aus den Empfangssignalen der einzelnen Sensoreinheiten erstellen kann. Diese Objektlisten stellen Empfangssignale der einzelnen Sensoreinheiten dar, die vorverarbeitet und vorselektiert wurden und dadurch eine erhebliche Minderung der Datenmengen und Größen bewirken. Daten können schneller verarbeitet werden ohne größere Rechenkapazitäten zu erfordern.

In einer weiteren Ausführungsform bestehen die jeweiligen Sensoreinheiten aus einem Frontend, das mindestens eine Sendeantenne und mindestens zwei, vorzugsweise vier, acht oder sechzehn, Empfängerantennen aufweist. Die Anordnung der Empfängerantennen in dem Frontend ist so ausgelegt, dass eine Bestimmung der Position in mindestens einer Ebene durch digitale Stahlformung ermöglicht wird. Durch die Anordnung der Senderantennen ist eine Positionsbestimmung in mindestens einer Ebene durch Phasenvergleich und/oder Amplitudenvergleich ermöglicht. Wobei die Anzahl der Empfängerantennen, an die für das Gesamtsystem notwendige Genauigkeit der Winkelbestimmung angepasst ist und ebenso die Sensitivität des Systems bestimmt.

Die Beschaffenheit der Antennen ist ausgelegt, um in einem Frequenzband von einem GHz bis zu einem THz betrieben werden zu können, bevorzugt liegt der Betriebsfrequenzbereich in einem Frequenzband von 5 bis 150 GHz, insbesondere im Bereich von 75 bis 85 GHz. Für die Anwendung im aeronautischen Bereich sind Millimeterwellen von Vorteil für die Höhenmessung. Millimeterwellen durchdringen dielektrische Stoffe wie Schneefall oder Nebel z.B. kann daher auch bei schlechter Sicht eine genaue Höhenmessung erfolgen. Auch kleinere Objekte bei schwierigen Sichtverhältnissen können erkannt werden. Je höher die Frequenz und die Bandbreite sind, desto besser ist die räumliche Auflösung.

Ferner sind die Empfänger und Sendeantennen in einer planaren Leiterplattentechnologie realisiert, die die Stabilität der Sensoreinheit verbessert.

Verwendbar sind für die zentrale Signalverarbeitungsvorrichtung alle zum Zeitpunkt der Erfindung zur Signalauslese, Datenspeicherung, Datenverarbeitung geeigneten Vorrichtungen, erfindungsgemäß geeignet und umfasst auch zukünftig erfindungsgemäß geeignete Vorrichtungen.

Ferner werden von den Kanälen der Empfängerantennen der Receiver-Arrays die empfangenen Signale durch die Signalverarbeitungsvorrichtung mittels eines Zeitmultiplexverfahrens, eines Frequenzmultiplexverfahrens, eines Codemultiplexverfahrens oder einer Kombination aus diesen Verfahren ausgelesen. Die Verwendung von Multiplexverfahren bei der Datenauslese erlaubt eine parallele Abfolge von Datenauslese und Auswertung. Auch eine größere Flexibilität des Systems durch die Auswahl oder die Kombination dieser Verfahren ist möglich.

Bei allen Multiplexverfahren wird die Entfernungsbestimmung, die (Range-FFT), gleich nach der Digitalisierung der Analogsignaldaten durchgeführt. Dies birgt den Vorteil in sich, dass Objekte, deren Entfernung als nicht relevant für das Tracking betrachtet werden, an dieser Stelle aussortiert werden können um den Datensatz zu minimieren. Diese Objekte werden dann gar nicht in die Objektlisten aufgenommen.

Als besonders vorteilhaft erweist sich das Multiplexverfahren um die Daten aus allen Sensoreinheiten bereits auf Rohdatenebene auf dieselbe Bezugsgröße zu berechnen. Jede Sensoreinheit verfügt über einen eigenen Bezugsrahmen, in welchem die Objekte mit oben genannten Verfahren berechnet werden. Herkömmlicherweise werden diese Daten dann erst zur Verfolgung eines Objekts auf der Stufe des Trackers zusammengeführt. Die einzelnen Gesichtsfelder werden einzeln betrachtet, hieraus resultiert ein wesentlich größerer Bedarf an Rechenleistung und Zeitaufwand um die einzelnen Objekte der verschiedenen Bezugsrahmen auf denselben Bezugsrahmen zu parametrisieren.

Bei dem Zeitmultiplexverfahren werden die Sensoreinheiten zeitversetzt ausgelesen, d.h. der Übertragungskanal wird in Zeitscheiben eingeteilt und jeder Sensoreinheit wird ein Zeitintervall für die Übertragung zugeteilt. Dadurch können alle Sensoreinheiten in äußerst kurzen Zeitabständen nacheinander ausgelesen werden. Diese Stückelung erlaubt eine gestückelte Datenvorverarbeitung, z.B. nach dem die Analogsignale mittels eines AD-Wandlers in Digitaldaten umgewandelt wurden, kann eine erste schnelle Fourier-Transformation FFT erfolgen.

Die selektierten Daten werden von einer Trackingeinheit ausgewertet und für die DarStellung als Datensatz transferiert. Die Signaldatenauslese, die Vorverarbeitung und die Auswertung können simultan stattfinden. Während die Datenauswertung des ersten Zyklus noch andauert, kann die Datenauslese des zweiten Zyklus bereits stattfinden.

Bei dem Frequenzmultiplexing wird den Sensoreinheiten ein eigenes Frequenzband zugeteilt und die Datenerfassung erfolgt simultan wie auch die Vorverarbeitung der Daten, d.h. nach dem die Analogsignale mittels eines AD-Wandlers in Digitaldaten umgewandelt wurden, kann eine erste schnelle Fourier-Transformation FFT erfolgen. Dies erfolgt für Sensoreinheiten simultan.

Die selektierten Daten werden von einer Trackingeinheit ausgewertet und für die Darstellung als Datensatz transferiert. Die Signaldatenauslese, die Vorverarbeitung und die Auswertung können simultan stattfinden. Während die Datenauswertung des ersten Zyklus noch andauert, kann die Datenauslese des zweiten Zyklus bereits stattfinden.

Das Code-Multiplexing erfasst die Daten ebenfalls simultan, den Sensoreinheiten wird ein Code zugeteilt und so kann die dem Datenstrom einer Sensoreinheit zugeordnet werden.

Ferner werden diese digitalisierten Daten die durch ein Multiplexverfahren ausgelesen wurden, nach der Methode der digitalen Strahlformung (Beamforming) zu einem gebündelten Antennenstrahl gebündelt. Dies ist ein Signalverarbeitungsverfahren, welches bei Sensorarrays für das richtungsabhängige Empfangen oder Senden von Signalen Verwendung findet.

Außerdem werden eine Geschwindigkeitsberechnung und eine Entfernungsberechnung mittels einer zweidimensionalen FFT durchgeführt und anschließend kann durch einen sogenannten Falschalarmraten bzw. "Constant false alarm rate" CFAR-Algorithmus nach Objekten gesucht werden, welche sich aus dem Rauschen des Sensors oder vor störendem Hintergrund - sog. Clutter - hervorheben (Pre-targets).

Die Berechnungsschritte der Entfernungs- und Geschwindigkeitsberechnung, Positionsbestimmung und das Differenzieren der Signale von dem Hintergrundrauschen und Bodenreflexionen erlaubt es nur diese Signale als relevante Objekte bereits auf Rohdatenebene zu selektieren. Es werden Objektlisten erstellt die aus diesen vorselektierten Signaldaten der Sensoreinheiten bestehen. Dadurch wird die Gesamtdatenmenge reduziert und vorbereitet, die eine schnellere Auswertung zufolge hat.

Ferner werden die Signaldaten der Sensoreinheiten so zusammengeführt, dass sie dieselben Bezugsgrößen und selben Bezugsrahmen aufweisen und somit das virtuelle Gesichtsfeld gebildet werden kann. Die Daten der einzelnen Sensoreinheiten werden in ein gemeinsames Bezugssystem transferiert, das als die Summe der einzelnen Gesichtsfelder betrachtet werden kann. Durch diese Parametrisierung auf ein System werden Überschneidungen nicht dargestellt.

In einer Ausführungsform wird das Zusammenführen der Signaldaten auf einen Bezugsrahmen nach dem Bilden der Objektlisten durchgeführt.

In einer weiteren Ausführungsform wird das Zusammenführen der Signaldaten vor dem Bilden der Objektlisten durchgeführt. Dies kann nach dem Verknüpfen der EmpfangsSignale zu gebündelten Daten, oder nach der Geschwindigkeitsberechnung (Doppler-FFT) oder nach der Entfernungsberechnung (Range FFT) durchgeführt werden.

Somit kann die Position eines Objektes, das ursprünglich in dem Gesichtsfeld einer Sensoreinheit ihre Bezugsgrößen hat, in dem virtuellen Gesichtsfeld mittels eines Tracking-Algorithmus dargestellt und verfolgt werden.

Besonders vorteilhaft ist das Zusammenführen der beiden oder mehrere Bezugssysteme zu einem einzigen virtuellen Bezugssystem, für das Tracking der Objekte. Da die einzelnen Objektpunkte nicht von einem in das andere System transferiert und verknüpft werden müssen, wird die auszuwertende Datenmenge verringert. Insbesondere da die Daten vorverarbeitet und vorselektiert werden wird die Datenmenge verringert, dies ist besonders wichtig bei hohen Datenausleseraten die adhoc ausgewertet werden müssen, damit kein Pile-up oder Datenstau der Datenpakete entstehen kann.

Herkömmlich kann dies in solchen Fällen durch größere oder eine Mehrzahl von Datenverarbeitungsvorrichtungen oder durch die Verlängerung der Datenauslesestrecken vermieden werden.

Unter Bezugnahme auf die nachfolgenden Zeichnungen sollen einzelne Ausführungsformen der vorliegenden Erfindung dargestellt werden. Einander entsprechende Teile sind in allen Figuren mit den gleichen Bezugszeichen versehen.
Fig. 1 zeigt eine Antennenanordnung in einem Frontend.
Fig. 2 zeigt eine Ausführungsform mit einem Sensor mit drei Sensoreinheiten.
Fig. 3 zeigt eine weitere Ausführungsform mit einem Sensor mit zwei Sensoreinheiten.
Fig. 4 zeigt den Auslese- und Signalbearbeitungsablauf für einen Sensor mit 2 Sensoreinheiten mit einem Zeitmultiplexverfahren.
Fig. 5 zeigt in analoger Weise die Datenauslese und Auswertung für einen Sensor mit drei Sensoreinheiten.
Fig. 6 zeigt die zeitgleiche Datenauslese und Auswertung mit einem Frequenzmultiplexverfahren im Fall eines Sensors mit zwei Sensoreinheiten.
Fig. 7 zeigt einen Sensor mit zwei Sensoreinheiten mit dem Gesichtsfeld aus Strahlkeulen.
Fig. 8 zeigt eine verfolgte Objektspur die durch 2 Gesichtsfelder geht.
Fig. 9 zeigt die Verwendung zweier anmeldungsgemäßen Sensoren für eine 360° Abdeckung
Fig.10 zeigt die Verwendung der Sensoranordnung gemäß Fig. 9 in einem Helikoptersystem

Nachfolgend werden Ausführungsbeispiele der Erfindung anhand von Figuren näher erläutert.

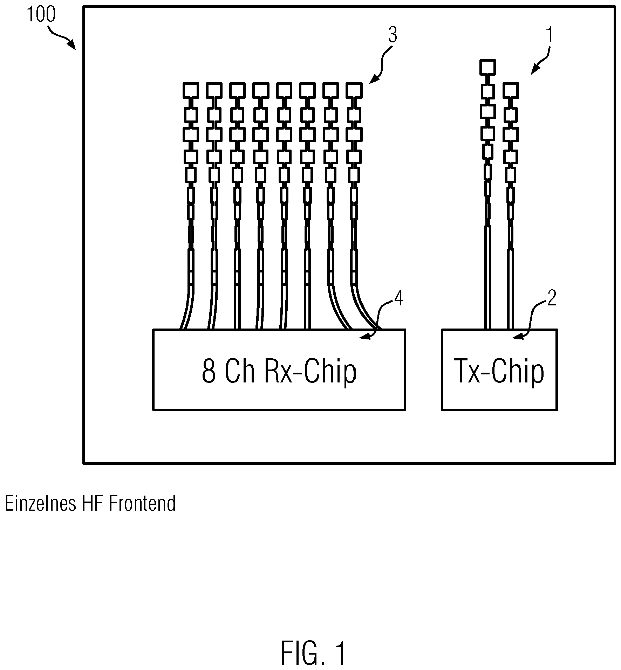

**Fig. 1** zeigt ein Beispiel der Antennenanordnung (100) in einem Frontend. Zwei Sendeantennen (1) sind an eine Steuer- und Ausleseeinheit (2) gekoppelt und ein Array (3) aus 8 Empfängerantennen ist an eine Steuer- und Ausleseeinheit (4) gekoppelt. Dieses in Fig. 1 gezeigte Frontend z.B. ist ausgelegt für eine Höhenbestimmung mittels Phasenmonopuls, was durch die versetzt angeordneten Sendeantennen erreicht wird.

Die Anordnung und das jeweilige Gesichtsfeld eines Sensors mit zwei oder drei Sensoreinheiten werden in den beiden folgenden Figuren veranschaulicht. Es ist auch gezeigt, dass die Geometrie des Gehäuses wie auch die Positionierung der Sensoreinheit abhängig von der Anzahl der verwendeten Sensoreinheiten und der beabsichtigten Überlappzone der Gesichtsfelder ist.

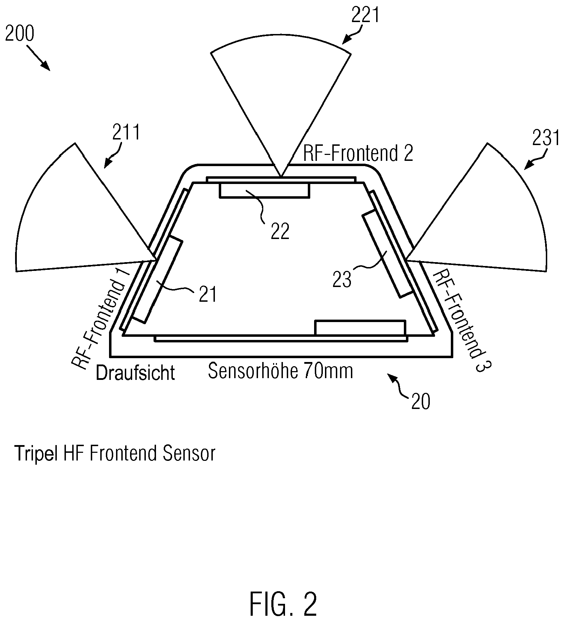

**Fig. 2** zeigt eine Ausführungsform mit einem Sensor (200) mit drei Sensoreinheiten (21, 22, 23), die jeweils eine Antennenanordnung (100) aufweisen, die in dem Sensorgehäuse (20) positioniert sind und jeweils schematisch ein Gesichtsfeld (211, 221, 231) umfassen.

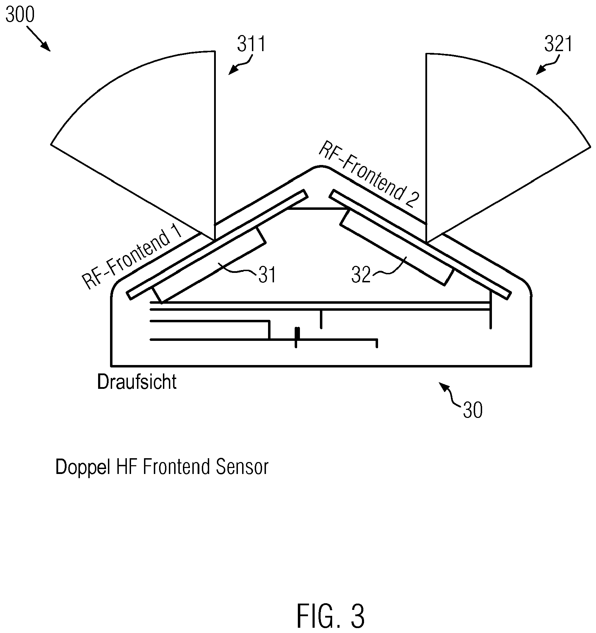

**Fig. 3** zeigt eine weitere Ausführungsform mit einem Sensor (300) mit zwei Sensoreinheiten (31, 32) die jeweils eine Antennenanordnung (100) aufweisen, die in dem Sensorgehäuse (30) positioniert sind und jeweils schematisch ein Gesichtsfeld (311, 321) umfassen.

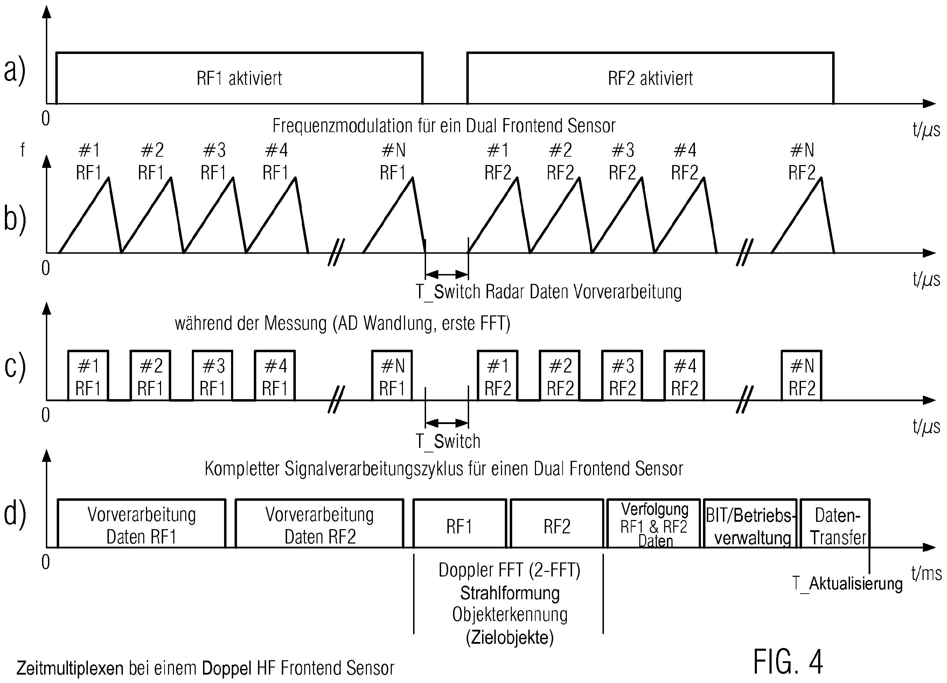

**Fig. 4** zeigt den Auslese- und Signalbearbeitungsablauf der Signalverarbeitungsvorrichtung für einen Sensor mit zwei Sensoreinheiten. Hierbei erfolgt die Datenauslese mit einem Zeitmultiplexverfahren. Die Fig. 4a) bis 4d) verdeutlichen die zeitliche Abfolge der einzelnen Ausleseschritte und die zeitgleiche Auswertung dieser ausgelesenen Daten. Fig. 4a) zeigt die zeitliche Aktivierungsabfolge der zwei Sensoreinheiten. In einer ersten Zeitspanne im Mikrosekundenbereich wird die Antennenanordnung des Frontends der ersten Sensoreinheit aktiviert, nach einer Umschaltdauer wird die erste Sensoreinheit deaktiviert und die zweite Sensoreinheit aktiviert. Fig. 4b) zeigt respektive die zeitliche Abfolge der einzelnen zeitportionierten Signaldatenauslese. Fig. 4c) zeigt das die Daten als zeitportionierte Datenpakete weiterverarbeitet werden. Das zeitportionierte Analogsignal wird mittels AD-Wandler in ein Digitaldatenpaket gewandelt, auf dieses Datenpaket wird eine Fast-Fourier-Transformation zu einer Entfernungsberechnung (Range-FFT) angewendet, bevor die Daten in dieser Form zur Zwischenspeicherung oder Weiterverarbeitung übergeben werden. Diese Datenverarbeitung erfolgt zeitgleich zur Datenaufnahme wie in Fig. 4b) gezeigt wird. Letztlich wird in Fig. 4d) die gesamte zeitliche Abfolge des Signalverarbeitungszyklus als Ganzes gezeigt.

Nach einer Datenauslese und Vorverarbeitung der Daten, wie sie in den Fig. 4a) bis 4c) gezeigt wird, der Datensatz der jeweiligen Sensoraktivierungszeiteinheiten RF1 und RF2 ausgewertet mittels einer Geschwindigkeitsberechnung (Doppler-FFT) und mit der Methode der Strahlformung wird die Position bestimmt und ein Objekterkennungsalgorithmus selektiert die Objektdaten aus diesen Sensoraktivierungszeiteinheiten.

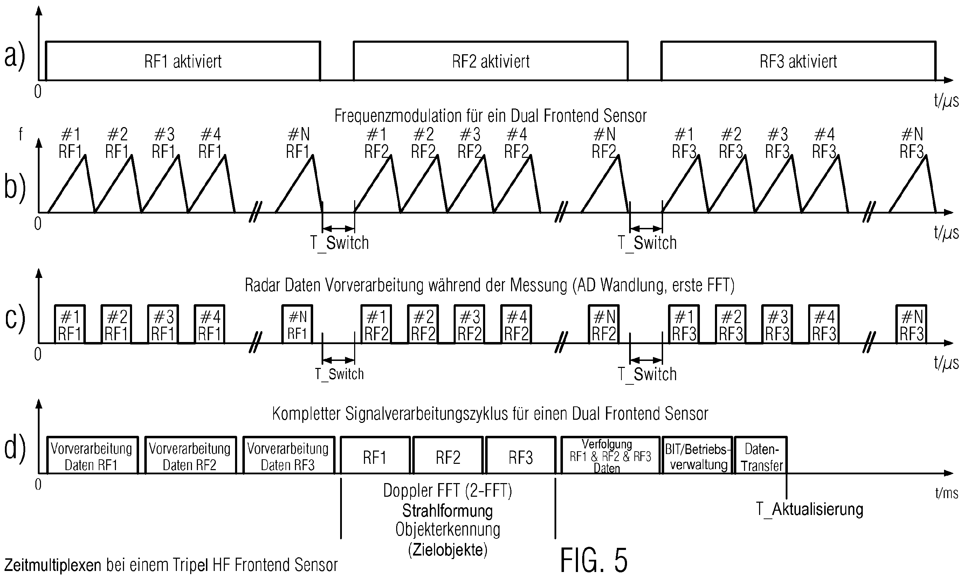

Die **Fig. 5** zeigt in analoger Weise die Datenauslese und Auswertung im Fall eines Sensors mit drei Sensoreinheiten.

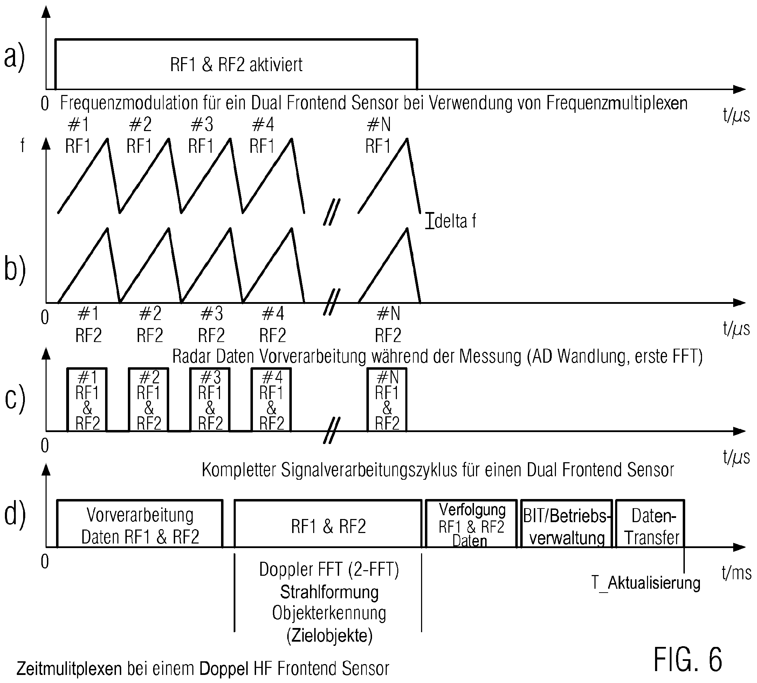

**Fig. 6** zeigt, wo die zeitgleiche Datenauslese und Auswertung mit einem Frequenzmultiplexverfahren im Fall eines Sensors mit zwei Sensoreinheiten zu sehen ist. In Fig. 6a) ist die in einem Zeitintervall zeitgleiche Datenauslese der beiden Sensoreinheiten, welche beide zeitgleich aktiviert wurden, zu sehen. Fig. 6b) zeigt, dass jeder Sensoreinheit ein bestimmtes Frequenzband zugeordnet wurde, die zeitgleich empfangenen Analogsignale sind der jeweiligen Sensoreinheit zuordenbar. Ferner zeigt Fig. 6c) die Vorverarbeitung der Signaldaten aus einem Zeitintervall. Die Analogsignale beider Sensoreinheiten werden mittels eines AD-Wandlers in Digitaldatenpakete umgewandelt und auf diese Datenpakete wird eine Fast-Fourier-Transformation für eine Entfernungsberechnung (Range-FFT) angewendet, bevor die Daten in dieser Form zur Zwischenspeicherung oder Weiterverarbeitung übergeben werden. Die gesamte zeitliche Abfolge des Signalverarbeitungszyklus wird in Fig. 6d) dargestellt. Nach einer Datenauslese und Vorverarbeitung der Daten, wie sie in den Fig. 6a) bis 6c) gezeigt ist, wird der Datensatz beider Sensoreinheiten gemeinsam ausgewertet, mittels einer Geschwindigkeitsberechnung (Doppler-FFT) und mit der Methode der Strahlformung wird die Position bestimmt und ein Objekterkennungsalgorithmus selektiert die Objektdaten aus dieser gemeinsamen Sensoraktivierungszeiteinheit.

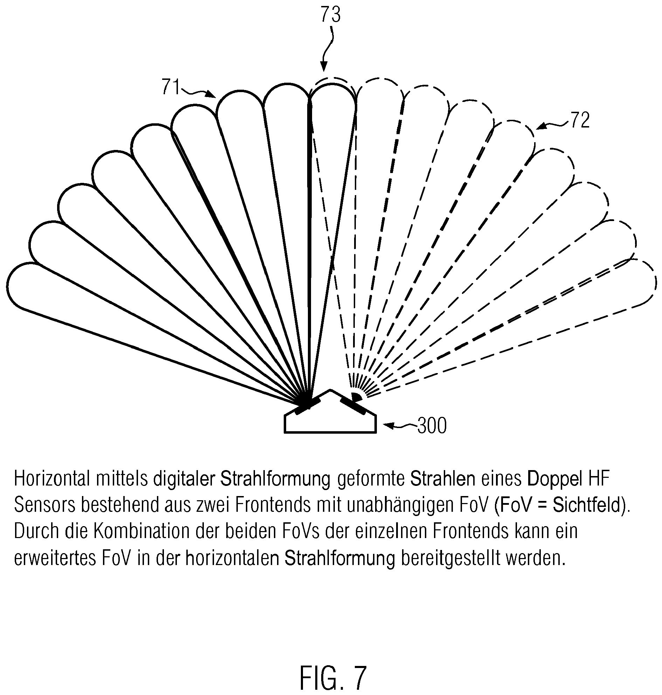

Die Überlagerung der Öffnungswinkel der einzelnen benachbarten Sensoreinheiten ist aus der **Fig. 7** zu sehen, die einen Sensor (300) mit zwei Sensoreinheiten wie in Fig. 3 gezeigt, mit durch die Strahlformung gebildete Strahlkeulen, die zusammen jeweils ein Gesichtsfeld für eine Sensoreinheit bilden. Beide Gesichtsfelder (71, 72) zusammen und mit den zwei sich überlappenden Strahlkeulen (73) kann ein durchgehendes erweitertes Gesichtsfeld bereitgestellt werden.

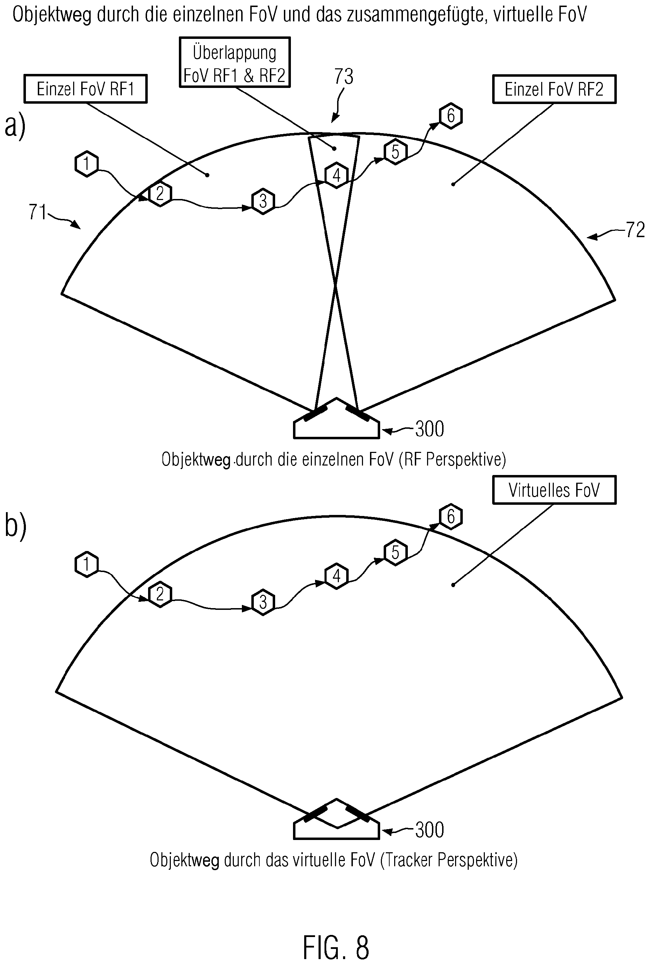

**Fig. 8** zeigt einen Sensor (300) mit zwei Sensoreinheiten, wie sie in Fig. 3 zu sehen sind, mit durch die Strahlformung gebildeten Strahlkeulen die zusammen jeweils ein Gesichtsfeld für eine Sensoreinheit bilden. Durch beide Gesichtsfelder (71, 72) zusammen und mit den zwei sich überlappenden Strahlkeulen (73) kann ein durchgehendes erweitertes Gesichtsfeld bereitgestellt werden. Schematisch ist die Einzelbetrachtung der Gesichtsfelder in Fig. 8 zu sehen, die die aus den Strahlkeulen (73) gebildeten Gesichtsfelder (71, 72) und den Überlappungsbereich zeigt. Wobei in Fig. 8a) noch beide Gesichtsfelder und der Überlappungsbereich dargestellt sind und die verfolgte Objektspur von einem Gesichtsfeld in das andere übergeht. Der Objektspurpunkt 4 wird von beiden Sensoreinheiten ausgelesen und ausgewertet und dann von einem Bezugssystem in das andere transferiert. Hingegen zeigt Fig. 8b), dass dieselbe Objektspur in einem virtuellen erweiterten Gesichtsfeld wie es beispielsweise in Fig. 7 und Fig. 8a) dargestellt ist, aus den Gesichtsfeldern der einzelnen Sensoreinheiten gebildet wird.

Als besondere Verwendung ist ein Hubschrauberradar angedacht, wobei der entscheidende Vorteil darin besteht, dass eine komplette 360° Rundumabdeckung des Umfelds mit lediglich 2 Sensorgeräten erreicht werden kann, die fest an der Helikopterstruktur unterhalb der Rotorachse montiert sind, ohne die Notwendigkeit zusätzlicher Auf- oder Anbauten. Zusätzlich kann durch die hohe Integration der einzelnen Komponenten das gesamte System mit diesen 2 Sensorgeräten umgesetzt werden, da sie als sogenannte Smart Sensoren ausgelegt werden können. Dabei werden die gesamte Datenverarbeitung und die Erzeugung eines 360° Statusreports innerhalb der Sensorgeräte umgesetzt. Dazu findet zum einen eine Kommunikation zwischen den bevorzugt zwei Sensoren statt, die vorzugsweise an der linken & rechten Seite des Hubschraubers oder vorne & hinten am Hubschrauber angebracht sind. Ebenso findet eine Kommunikation mit dem Avioniksystem des Hubschraubers statt, an das die erfassten Hindernisse gesendet werden. Somit ist eine Berechnung oder Bewertung der Daten innerhalb der Hubschrauberavionik nicht mehr notwendig, lediglich die Ausgabe an das HMI (Human-Maschine-Interface) in Form von optischen und/oder akustischen Signalen und Warnhinweisen wird von der Avionik übernommen. Für die Variante zur Nachrüstung von bereits im Betrieb befindlichen Helikoptern oder Standalone Integrationen wird statt der Anbindung über die Avionik eine zusätzliche Interface-Box benötigt, die aus den Informationen der einzelnen beobachteten Bereiche eine Displayanzeige und/oder ein akustisches Signal generiert. In jedem Fall wird die gesamte Sensorsystemfunktionalität ausschließlich in den Sensorgeräten untergebracht.

Dabei werden zunächst in einem Sensorgehäuse zwei oder mehr, vorzugsweise drei Einzelfrontends im Sensorgehäuse angebracht, so dass die einzelnen FoV von zwei benachbarten Frontends sich um einige Grad des Öffnungswickels überlagern.

Dafür werden zunächst die Radar-Rohdaten aufbereitet und zu einem Gesamtbild für die einzelne Sensoreinheit zusammengefasst. Die so berechneten Pre- Targets werden nun über mehrere Messungen hinweg plausibilisiert und zu Tracks zusammengefasst. Dabei werden auch weitere Systeminputs (soweit in der jeweiligen Hubschrauberinstallation vorhanden) berücksichtigt, wie z.B. Geschwindigkeit über Grund, Drehungen des Helikopters und weitere. Außerdem werden die Track-Informationen mit den zusammen geschlossenen benachbarten Sensoreinheiten (falls vorhanden) ausgetauscht um ein Gesamtbild für eine 360° Abdeckung zu erreichen. Eine einzelne Sensoreinheit hat jeweils einen maximalen überwachten Bereich von bis zu 200° Azimut. Die einzelnen Sensoreinheiten sind so ausgelegt, dass sie direkt ohne Anpassungen mit weiteren gleichen Sensoreinheiten zu einem Gesamtsensorsystem zusammen geschaltet werden können. Hierzu ist keine weitere elektronische Hardware erforderlich, eine einfache Kabelverbindung reicht aus. Somit lassen sich größere Bereiche überwachen und auch zusätzliche Sensoren installieren um auch mögliche durch Anbauten oder ähnliches verursachte tote Winkel abzudecken.

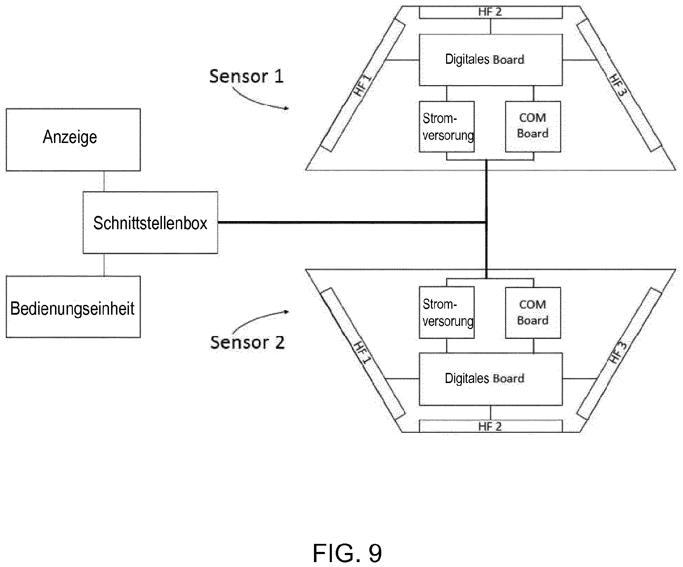

In **Fig. 9** sind lediglich zwei erfindungsgemäße Vorrichtungen aneinander liegend so schematisch angeordnet, dass eine 360° Abdeckung ermöglicht wird. In dieser Ausführungsform ist es ebenso von Vorteil, wenn jeweils 3 Sensoreinheiten verwendet werden.

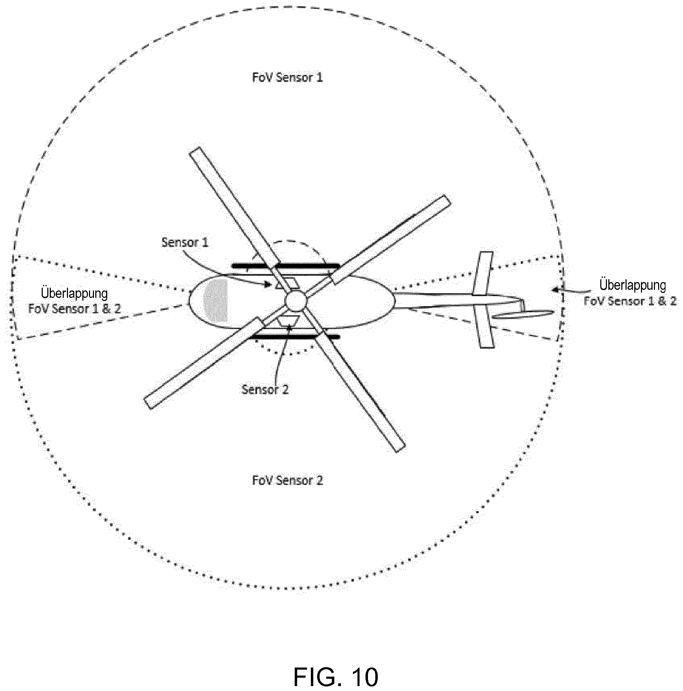

In **Fig. 10** sind ferner das Anordnungsbeispiel als Hubschrauberradar dargestellt, und zwar die entsprechende Platzierung der beiden erfindungsmäßen Vorrichtungen an dem Hubschrauber. Deutlich ist in Fig. 10 die 360° Abdeckung dargestellt, die zusätzlich zwei Überlappungsbereiche erkennen lässt.

Die Anmeldung umfasst auch die Gegenstände gemäß nachfolgenden Ziffern (1) bis (24):
(1) Vorrichtung zur Bestimmung einer Position eines Objekts im dreidimensionalen Raum, insbesondere eines sich bewegenden Objekts dadurch gekennzeichnet, dass die Vorrichtung mindestens zwei Sensoreinheiten aufweist, wobei jede Sensoreinheit ein Gesichtsfeld (FoV) aufweist, und wobei alle Sensoreinheiten über eine zentrale Signalverarbeitungsvorrichtung gekoppelt sind.
(2) Vorrichtung nach Ziffer (1), gekennzeichnet durch ein virtuelles Gesichtsfeld das aus den Daten aller Sensoreinheiten gebildet wird um ein einzelnes erweitertes Gesichtsfeld bereitzustellen.
(3) Vorrichtung nach Ziffer (2), wobei das erweiterte Gesichtsfeld durch das Ausrichten der Sensoreinheiten und/oder durch unterschiedliche Hauptstrahlungsrichtungen (Main-Beamdirection) erzeugt wird.
(4) Vorrichtung nach einer der Ziffern (1) bis (3), wobei die Erfassung von Empfangssignalen von den mindestens zwei Sensoreinheiten nach einem Multiplexverfahren erfolgt.
(5) Vorrichtung nach einer der Ziffern (1) bis (4), wobei die Signalverarbeitungsvorrichtung so ausgelegt ist, um selektierte Objektlisten aus den Empfangssignalen zu erstellt.
(6) Vorrichtung nach einer der Ziffern (1) bis (5), wobei die Sensoreinheit ein Frontend aufweist, das mindestens zwei Empfängerantennen und mindestens eine Sendeantenne aufweist.
(7) Vorrichtung nach Ziffer (6), wobei ein Frontend bevorzugt vier, acht oder sechzehn Empfängerantennen aufweist.
(8) Vorrichtung nach Ziffer (6) oder (7), wobei die Empfängerantennen so angeordnet sind, dass eine Positionsbestimmung in mindestens einer Ebene durch digitale Strahlformung ermöglicht wird.
(9) Vorrichtung nach Ziffer (6), (7) oder (8), wobei die Senderantennen so angeordnet sind, dass eine Positionsbestimmung in mindestens einer Ebene durch Phasenvergleich und/oder Amplitudenvergleich ermöglicht wird.
(10) Vorrichtung nach einer der vorhergehenden Ziffern (1) bis (9), wobei die Sensoreinheiten im Frequenzband von 1 GHz bis 1 THz, bevorzugt im Bereich von 5 GHz bis 150 GHz und insbesondere im Bereich von 75 GHz bis 85 GHz betrieben werden.
(11) Vorrichtung nach einer der Ziffern (6) bis (10), wobei die Empfängerantennen und Sendeantennen in einer planaren Leiterplattentechnologie realisiert wurden.
(12) Verfahren zur Bestimmung einer Position eines Objekts, insbesondere eines sich bewegenden Objekts, mit den Verfahrensschritten:
   Bereitstellen von mindestens zwei Sensoreinheiten;
   Koppeln der mindestens zwei Sensoreinheiten mit einer zentralen Signalverarbeitungsvorrichtung.
(13) Verfahren nach Ziffer (12), wobei die Empfangssignale der einzelnen Frontends, nach einem Multiplexverfahren gebündelt werden, welches ein Zeitmultiplexverfahren, ein Frequenzmultiplexverfahren, ein Codemultiplexverfahren oder eine beliebige Kombination aus diesen Multiplexverfahren ist.
(14) Verfahren nach einer der Ziffern (12) oder (13), wobei die Empfangssignale nach der Methode der digitalen Strahlformung zu einem gebündelten Antennenstrahl gebündelt werden.
(15) Verfahren nach Ziffer (14), wobei einer Geschwindigkeitskorrektur und einer Entfernungskorrektur mittels einer zweidimensionalen FFT durch Vergleich von Ausgangssignalen von sich überlagernden Antennenzeilen, welche dem gebündelten Antennenstrahl entsprechen, durchgeführt wird.
(16) Verfahren nach einer der Ziffern (12) bis (15), umfasst des Weiteren ein Selektionsverfahren und Objekterkennungsverfahren die so ausgelegt sind um Objektlisten aus den selektierten Daten zu erstellen.
(17) Verfahren nach einer der Ziffern (12) bis (16), umfasst des Weiteren das Zusammenführen selektierter Daten zur gemeinsamen Auswertung.
(18) Verfahren nach einer der Ziffern (12) bis (17), wobei das Zusammenführen der selektierten Daten den Schritt des Umwandelns der selektierten Daten auf gemeinsame Bezugsgrößen umfasst, wobei die einzelnen objektgebundenen Bezugsgrößen von den jeweiligen Frontends bei der Zusammenführung der Daten für das virtuelle Gesichtsfeld (FoV) so umgewandelt werden, dass die Position des Objekts in einem virtuellen Gesichtsfeld dargestellt werden kann.
(19) Verfahren nach einer der Ziffern (12) bis (18), wobei die Zusammenführung der selektierten Daten für das gesamte virtuelle Gesichtsfeld (FoV) eines virtuellen Sensors nach Bilden der Objektlisten erfolgt.
(20) Verfahren nach einer der Ziffern (12) bis (18), wobei die Zusammenführung der selektierten Daten für das gesamte virtuelle Gesichtsfeld (FoV) vor dem Bilden der Objektliste erfolgt, insbesondere nach dem Verknüpfen der Empfangssignale zu gebündelten Daten, oder nach der Geschwindigkeitsberechnung (Doppler-FFT), oder nach der Entfernungsberechnung (Range FFT).
(21) Verfahren nach einer der Ziffern (12) bis (20), wobei das virtuelle Gesichtsfeld aus den Daten aller Sensoreinheiten gebildet wird um ein einzelnes erweitertes Gesichtsfeld bereitzustellen.
(22) Verfahren nach einer der Ziffern (12) bis (21), wobei das Auswerten der Daten einen Objekt-Tracking Algorithmus umfasst, der auf die zusammengeführten selektierten Daten angewendet wird.
(23) Radarsystem zur Verwendung einer Vorrichtung nach einer der Ziffern (1) bis (11) und dem Verfahren nach einer der Ziffern (12) bis (22) zur Bestimmung einer Position eines Objekts im dreidimensionalen Raum, insbesondere eines sich bewegenden Objekts.
(24) Verwendung des Radarsystems in einem Hubschrauberradar.

## Patentansprüche

1. Vorrichtung zur Bestimmung einer Position eines Objekts im dreidimensionalen Raum, insbesondere eines sich bewegenden Objekts **dadurch gekennzeichnet, dass** die Vorrichtung mindestens zwei Sensoreinheiten aufweist, wobei jede Sensoreinheit ein Gesichtsfeld (FoV) aufweist, wobei alle Sensoreinheiten über eine zentrale Signalverarbeitungsvorrichtung gekoppelt sind, und wobei die Erfassung von Empfangssignalen von den mindestens zwei Sensoreinheiten nach einem Multiplexverfahren erfolgt.

2. Vorrichtung nach Anspruch 1, **gekennzeichnet durch** ein virtuelles Gesichtsfeld das aus den Daten aller Sensoreinheiten gebildet wird um ein einzelnes erweitertes Gesichtsfeld bereitzustellen.

3. Vorrichtung nach Anspruch 2, wobei das erweiterte Gesichtsfeld durch das Ausrichten der Sensoreinheiten und/oder durch unterschiedliche Hauptstrahlungsrichtungen (Main-Beamdirection) erzeugt wird.

4. Vorrichtung nach einem der Ansprüche 1 bis 3, wobei die Signalverarbeitungsvorrichtung so ausgelegt ist, um selektierte Objektlisten aus den Empfangssignalen zu erstellt.

5. Vorrichtung nach einem der Ansprüche 1 bis 4, wobei die Sensoreinheit ein Frontend aufweist, das mindestens zwei Empfängerantennen und mindestens eine Sendeantenne aufweist.

6. Vorrichtung nach Anspruch 5, wobei die Empfängerantennen so angeordnet sind, dass eine Positionsbestimmung in mindestens einer Ebene durch digitale Strahlformung ermöglicht wird.

7. Vorrichtung nach Anspruch 5 oder 6, wobei die Senderantennen so angeordnet sind, dass eine Positionsbestimmung in mindestens einer Ebene durch Phasenvergleich und/oder Amplitudenvergleich ermöglicht wird.

8. Vorrichtung nach einem der vorhergehenden Ansprüche, wobei die Sensoreinheiten im Frequenzband von 1 GHz bis 1 THz, bevorzugt im Bereich von 5 GHz bis 150 GHz und insbesondere im Bereich von 75 GHz bis 85 GHz betrieben werden.

9. Verfahren zur Bestimmung einer Position eines Objekts, insbesondere eines sich bewegenden Objekts, mit den Verfahrensschritten:
Bereitstellen von mindestens zwei Sensoreinheiten;
Koppeln der mindestens zwei Sensoreinheiten mit einer zentralen Signalverarbeitungsvorrichtung; wobei
die Empfangssignale der einzelnen Frontends, nach einem Multiplexverfahren gebündelt werden, welches ein Zeitmultiplexverfahren, ein Frequenzmultiplexverfahren, ein Codemultiplexverfahren oder eine beliebige Kombination aus diesen Multiplexverfahren ist.

10. Verfahren nach Anspruch 9, wobei die Empfangssignale nach der Methode der digitalen Strahlformung zu einem gebündelten Antennenstrahl gebündelt werden.

11. Verfahren nach Anspruch 10, wobei einer Geschwindigkeitskorrektur und einer Entfernungskorrektur mittels einer zweidimensionalen FFT durch Vergleich von Ausgangssignalen von sich überlagernden Antennenzeilen, welche dem gebündelten Antennenstrahl entsprechen, durchgeführt wird.

12. Verfahren nach einem der Ansprüche 9 bis 11, wobei das Zusammenführen der selektierten Daten den Schritt des Umwandeins der selektierten Daten auf gemeinsame Bezugsgrößen umfasst, wobei die einzelnen objektgebundenen Bezugsgrößen von den jeweiligen Frontends bei der Zusammenführung der Daten für das virtuelle Gesichtsfeld (FoV) so umgewandelt werden, dass die Position des Objekts in einem virtuellen Gesichtsfeld dargestellt werden kann.

13. Verfahren nach einem der Ansprüche 9 bis 12, wobei die Zusammenführung der selektierten Daten für das gesamte virtuelle Gesichtsfeld (FoV) eines virtuellen Sensors nach Bilden der Objektlisten erfolgt.

14. Verfahren nach einem der Ansprüche 9 bis 12, wobei die Zusammenführung der selektierten Daten für das gesamte virtuelle Gesichtsfeld (FoV) vor dem Bilden der Objektliste erfolgt, insbesondere nach dem Verknüpfen der Empfangssignale zu gebündelten Daten, oder nach der Geschwindigkeitsberechnung (Doppler-FFT), oder nach der Entfernungsberechnung (Range FFT).

15. Verfahren nach einem der Ansprüche 9 bis 14, wobei das virtuelle Gesichtsfeld aus den Daten aller Sensoreinheiten gebildet wird um ein einzelnes erweitertes Gesichtsfeld bereitzustellen.
